# EUROPÄISCHE PATENTSCHRIFT

(11) **EP 0 868 399 B1**
(45) Veröffentlichungstag und Bekanntmachung des Hinweises auf die Patenterteilung: **21.08.2002**
(21) Anmeldenummer: 96944616.0
(22) Anmeldetag: 20.12.1996
(51) Int. Cl.: C01B 21/14

(54) **VERFAHREN ZUR HERSTELLUNG VON WÄSSRIGEN LÖSUNGEN VON FREIEM HYDROXYLAMIN**
PROCESS FOR PRODUCING AQUEOUS SOLUTIONS OF FREE HYDROXYLAMINE
PROCEDE DE PREPARATION DE SOLUTIONS AQUEUSES D'HYDROXYLAMINE LIBRE

(30) Priorität: 20.12.1995 DE 19547758; 29.07.1996 US 688281
(43) Veröffentlichungstag der Anmeldung: 07.10.1998
(73) Patentinhaber: BASF AKTIENGESELLSCHAFT, 67056 Ludwigshafen (DE); BASF CORPORATION, Mount Olive, New Jersey 07828-1234 (US)
(72) Erfinder: WATZENBERGER, Otto, 68199 Mannheim (DE); SCHNEIDER, Hans-Michael, D-67549 Worms (DE); LEUTNER, Bernd, D-67227 Frankenthal (DE); FRIEDERANG, Albrecht, Wilhelm, New York, NY 10024 (US)
(74) Vertreter: Kinzebach, Werner, Dr.
(86) Internationale Anmeldenummer: EP9605773
(87) Internationale Veröffentlichungsnummer: WO97022551

(56) Entgegenhaltungen:
- DE-A- 3 528 463
- US-A- 5 472 679

## Beschreibung

Die vorliegende Erfindung betrifft ein Verfahren zur Herstellung von wäßrigen Lösungen von freiem Hydroxylamin.

Hydroxylamin ist ein wichtiges Zwischenprodukt für die chemische Industrie. Es bedarf jedoch besonderer Vorsicht bei der Handhabung, weil es die Augen, die Haut und die Schleimhäute reizt und allergen wirken kann. Vor allem aber ist es thermisch instabil, d.h. es zersetzt sich, insbesondere bei Anwesenheit von Metallionen, im basischen Milieu, in höherer Konzentration und bei höheren Temperaturen langsam bis explosionsartig.

Hydroxylamin wird großtechnisch als Hydroxylammoniumsalz, üblicherweise als Hydroxylammoniumsulfat, hergestellt und auch als solches eingesetzt. Häufig ist aber die Anwendung einer salzfreien wäßrigen Lösung von freiem Hydroxylamin hoher Konzentration erforderlich. Um den oben genannten Problemen und insbesondere der Zersetzlichkeit des Hydroxylamins vorzubeugen, hat die Fachwelt bei der Gewinnung salzfreier Hydroxylamin-Lösungen die Anwendung klassischer Methoden der Großchemie zur Anreicherung destillierbarer Substanzen, beispielsweise die Destillation, vermieden. Die Destillation von Hydroxylamin, selbst im Labormaßstab, wird sogar als besonders gefährliche Operation bezeichnet, siehe Roth-Weller:Gefährliche Chemische Reaktionen, Stoffinformationen Hydroxylamin, Seite 3, 1984, 2, Ecomed-Verlag. Die Destillation von Hydroxylamin in technischem Maßstab wurde deshalb auch nie in technischen Veröffentlichungen in Betracht gezogen. Stattdessen ist man auf Spezialmethoden ausgewichen, die jedoch alle mit gravierenden Nachteilen behaftet sind.

So wurde versucht, freies Hydroxylamin von wäßrigen Salzlösungen mit Hilfe von Ionenaustauschern abzutrennen, siehe beispielsweise US-A-4,147,623, EP-A-1787, EP-A-237052 und Z. Anorg. Ch. 288, 28-35 (1956). Ein derartiges Verfahren führt jedoch nur zu verdünnten Lösungen bei niedrigen Raum-Zeit-Ausbeuten. Außerdem reagiert Hydroxylamin mit vielen Ionentauschern oder wird von diesen zersetzt.

Eine weitere Methode besteht in der Elektrodialyse einer wäßrigen Hydoxylammoniumsalzlösung in Elektrolysezellen mit semipermeablen Membranen, wie es beispielsweise in der DE-A-33 47 259, der JP-A-123771 und JP-A-123772 beschrieben ist. Ein derartiges Verfahren ist jedoch technisch und wirtschaftlich aufwendig und hat bislang keinen Eingang in die Technik gefunden.

Aus der DE-A-35 28 463 ist bekannt, freies Hydroxylamin aus Hydroxylammoniumsulfat durch Behandlung mit Calcium-, Strontium- oder Bariumoxid und Abtrennung der unlöslichen Erdalkalimetallsulfate herzustellen. Bei dieser Methode bereitet die Abtrennung der feinteilig anfallenden Sulfate große Schwierigkeiten. Hinzu kommt, daß nur verdünnte Lösungen erhalten werden und daß freies Hydroxylamin bei Verwendung von Calciumoxid oder Calciumhydroxid aufgrund der relativ guten Löslichkeit des Calciumsulfats noch unerwünscht hohe Ionenmengen enthält. Bei Verwendung von Strontium- und Bariumverbindungen stehen einem technischen Produktionsverfahren zudem der relativ hohe Preis und vor allem die Toxizität entgegen.

Die DE-A-12 47 284 beschreibt ein Verfahren, bei dem man alkoholische Lösungen von freiem Hydroxylamin durch Umsetzen von Hydroxylammoniumsulfat mit Ammoniak in Alkohol als Lösungsmittel und Abtrennen des Ammoniumsulfats erhält. Ein ähnliches Verfahren beschreibt die EP-A-108 294. Für eine Reihe von Anwendungen sind alkoholische Lösungen aber ungeeignet und unerwünscht. So müssen bei der Handhabung derartiger Lösungen besondere Vorkehrungen wegen ihrer Brennbarkeit getroffen werden.

Weiter muß der eingesetzte Alkohol in aller Regel aufwendig zurückgewonnen werden, da sich eine Einleitung von größeren Mengen an Alkohol in Kläranlagen oder in Vorfluter verbietet.

Schließlich beschreibt die DE-A-36 01 803 ein Verfahren zur Gewinnung von wäßrigen Lösungen von freiem Hydroxylamin, bei dem man Hydroxylammoniumsulfat mit Ammoniak in niederen Alkoholen umsetzt, das ausgefallene Ammoniumsulfat abtrennt, die alkoholische Lösung von freiem Hydroxylamin mit Wasser versetzt und aus der so erhaltenen Lösung den Alkohol abdestilliert. Auch für dieses Verfahren gelten die oben genannten Nachteile beim Arbeiten mit Alkohol. Außerdem ist aufgrund der Zersetzlichkeit des Hydroxylamins in Verbindung mit der Brennbarkeit der Alkohole besondere Vorsicht in der abschließenden Destillationsstufe erforderlich. Allen Verfahren des Standes der Technik ist gemeinsam, daß sie für die Durchführung in technischem Maßstab nicht geeignet sind bzw. einen unwirtschaftlich hohen zusätzlichen Sicherheitsaufwand erfordern.

Für die Zersetzung von Hydroxylamin wird eine Temperatur oberhalb von 65°C als kritisch angesehen. Bei einer Differentialthermoanalyse wurde die Onset-Temperatur einer 50 gew.%igen wäßrigen Hydroxylaminlösung (im Glastiegel) zu 70°C ermittelt. Die freigesetzte Wärmemenge von ca. 2,2 kJ/g 50 gew.%iger Lösung bestätigt das hohe thermische Potential des Stoffes. Die Differentialthermoanalyse ist eine mikrothermoanalytische Methode, die als Screening zur Abschätzung der thermischen Stabilität und des thermischen Potentials herangezogen wird. Die Onset-Temperatur ist die niedrigste Umgebungstemperatur, bei der in der Probe bei einer Aufheizrate von 1 K/min, beginnend bei 30°C, eine merkliche exotherme Reaktion abläuft. Aus Sicherheitsgründen soll die Verarbeitungstemperatur deutlich unterhalb der Onset-Temperatur liegen.

Die US-A-4,956,168 beschreibt im Rahmen der Herstellung von Hydroxylaminnitrat, daß eine Aufschlämmung von Hydroxylaminsulfat in Alkohol bei einer Temperatur, die 65°C nicht überschreitet, hergestellt wird. Diese Aufschlämmung wird dann mit Ammoniak bei einer Temperatur ≤ 65°C behandelt, um eine alkoholische Hydroxylaminlösung herzustellen.

Die US-A-5,472,679 wiederum beschreibt ein Verfahren zur Herstellung einer alkoholfreien, wäßrigen Hydroxylaminlösung durch Umsetzung einer Hydroxylaminsulfatlösung mit einer geeigneten Base bei einer Temperatur bis etwa 60°C. Das erhaltene Gemisch wird dann einer Destillation unter verringertem Druck bei einer Temperatur von weniger als 65°C unterworfen. Man erhält einen festen Rückstand (das bei der Freisetzung des Hydroxylamins gebildete Salz) und als Destillat eine wäßrige Hydroxylaminlösung, die 16 - 23 Gew.-% Hydroxylamin enthält. Dieses Verfahren hat den Nachteil, daß unter Vakuum gearbeitet und die Temperatur sorgfältig kontrolliert werden muß.

Außerdem bedingt das Verfahren ein Arbeiten mit Feststoffen.
Bei einem kontinuierlichen Verfahren müßte der Feststoff entsprechend kontinuierlich ausgeschleust werden. Dies kann verfahrenstechnisch große Probleme bereiten, wenn es sich wie z.B. bei Na₂SO₄xH₂O um einen zum Verbacken neigenden Feststoff handelt.

Ferner läuft die "Destillation" bis zur Trockene, korrekter als Eindampfen bezeichnet, derart ab, daß zunächst der Leichtsieder Wasser abdampft. Der Schwersieder Hydroxylamin reichert sich an. Es ist bekannt, daß die Zersetzungsneigung des Hydroxylamins mit der Konzentration an Hydroxylamin steigt. Damit steigen die Verluste an Hydroxylamin während des Prozesses. Es erhöht sich das Risiko, daß es aufgrund der hohen Konzentration an Hydroxylamin zu einer explosionsartig verlaufenden Zersetzung kommt. Es ist bekannt, daß reines Hydroxylamin bzw. Hydroxylamin > 70 Gew.% sich explosiv zersetzt. Für den genannten Prozeß sind somit entsprechende Sicherheitsanforderungen zu erfüllen.

Schließlich enthält der verbleibende Feststoff noch Restanteile an Hydroxylamin (an der Oberfläche adsorbiertes Hydroxylamin, Hydroxylamin in Feststoffzwischenräumen). Der Feststoff muß daher in einem gesonderten Entsorgungsverfahren dekontaminiert werden.

Überraschenderweise wurde nun gefunden, daß die Hydroxylaminlösung, die man nach teilweiser oder vollständiger Freisetzung von Hydroxylamin aus einem Hydroxylammoniumsalz in wäßriger Phase erhält, in eine wäßrige Hydroxylaminfraktion und eine Salzfraktion durch Behandlung mit Wasser oder Wasserdampf bei Temperaturen oberhalb von 65°C aufgetrennt werden kann, ohne daß eine merkliche Zersetzung des Hydroxylamins erfolgt.

Gegenstand der vorliegenden Erfindung ist daher ein Verfahren zur Herstellung einer wäßrigen Lösung von freiem Hydroxylamin, wobei man
a) ein Hydroxylammoniumsalz mit einer geeigneten Base in Wasser behandelt,
b) aus der erhaltenen Lösung gegebenenfalls unlösliche Bestandteile abtrennt,
c) die gemäß Stufe (a) oder Stufe (b) erhaltene Lösung durch Behandlung mit Wasser oder Wasserdampf in den Kolonnensumpf im Gegenstrom mit Hilfe einer Strippkolonne bei einer Temperatur ≥ 80°C in eine wäßrige Hydroxylaminfraktion und eine Salzfraktion auftrennt, und
d) falls gewünscht, die erhaltene wäßrige Hydroxylaminlösung destillativ aufkonzentriert.

Die Stufe (a) des erfindungsgemäßen Verfahrens wird in üblicher Weise durchgeführt. Als Hydroxylammoniumsalz kommen im allgemeinen die Hydroxylammoniumsalze von Mineralsäuren, wie z.B. der Schwefelsäure, Phosphorsäure oder Salzsäure, üblicherweise in wäßriger Lösung, zur Anwendung. Das Hydroxylammoniumsalz wird mit einer geeigneten anorganischen Base, beispielsweise Ammoniak, Natriumhydroxid, Kaliumhydroxid oder Calciumhydroxid, in wäßriger Lösung umgesetzt. Die Menge der Base wird so gewählt, daß das Hydroxylammoniumsalz vollständig oder zumindest teilweise in freies Hydroxylamin überführt wird. Dies kann kontinuierlich oder diskontinuierlich und bei Temperaturen im Bereich von etwa 0°C bis 100°C erfolgen. Man erhält eine wäßrige Lösung, die freies Hydroxylamin und das Salz enthält, das aus dem Basenkation und dem im Hydroxyl-ammoniumsalz vorhandenen Säureanion stammt.

Je nach Art und Konzentration des Hydroxylammoniumsalzes, der zur Freisetzung des Hydroxylamins verwendeten Base und der Temperatur, bei der die Umsetzung durchgeführt wird, kann ein Teil des entstandenen Salzes ausfallen. Gegebenenfalls kann man die Lösung auch abkühlen, um eine größere Menge des Salzes auszufällen. Falls derartige unlösliche Bestandteile, d.h. Salzniederschlag, vorhanden sind, werden diese zweckmäßigerweise vor der Stufe (c) in üblicher Weise abgetrennt. Je nach Verfahrensbedingungen, z.B. bei Verwendung von Ammoniak als Base, bzw. bei Verwendung von Natriumhydroxid als Base und relativ geringer Konzentration der Reaktionspartner, fällt kein Niederschlag an, so daß die Stufe (b) entfallen kann.

Die Trennung (Stufe c)) der aus Stufe (a) bzw. Stufe (b) erhaltenen Lösung in eine wäßrige Hydroxylaminfraktion und eine Salzfraktion erfolgt durch Behandeln mit Wasser oder Wasserdampf in einer Strippkolonne. Diese ist eine übliche Bodenkolonne, z.B. Glocken- oder Siebbodenkolonne, oder ist mit einer üblichen Packung versehen, z.B. Raschig- Ringen, Pall-Ringen, Sattelkörpern etc., und weist vorzugsweise eine theoretische Bodenzahl im Bereich von 5 bis 70 auf. Die Zuleitung der stabilisierten Lösung, die gegebenenfalls mit weiterem Stabilisator versetzt werden kann, erfolgt direkt auf den Kopf der Kolonne (Oberteil der Packung oder oberster Boden).

In der Strippkolonne erfolgt die Zerlegung der Lösung derart, daß die Salzfraktion am Sumpf der Kolonne und eine wäßrige Hydroxylaminfraktion in Höhe des Zulaufbodens oder oberhalb davon, insbesondere über Kopf abgezogen wird. Um dies zu erreichen, wird die Lösung durch Einleiten von Wasser und/oder Wasserdampf in den Kolonnensumpf im Gegenstrom behandelt. Bei einer Hydroxylaminkonzentration von 5 bis 45 Gew.-% in der Feedlösung beträgt der Mengenstrom an Wasser bzw. Wasserdampf im allgemeinen das 1- bis 8-fache, insbesondere das 1 bis 5-fache der Feed-Menge. Die Temperatur des eingeleiteten Wassers oder Wasserdampfs liegt im allgemeinen im Bereich von 80 bis 180°C. Gegebenenfalls wird der Sumpf der Kolonne zusätzlich beheizt.

Der Druck in der Strippkolonne beträgt im allgemeinen 5 bis 300 kPa (0,05 bis 3 bar), vorzugsweise 50 bis 300 kPa (0,5 bis 3 bar). Besonders bevorzugt ist es, die Strippkolonne bei einem Druck im Bereich von 50 bis 150 kPa (0,5 bis 1,5 bar) zu betreiben.

Die im Kopf der Strippkolonne herrschenden Temperaturen richten sich nach dem Druck, bei dem die Kolonne betrieben wird. Sie liegen im allgemeinen im Bereich von 80 - 130°C, vorzugsweise 90 bis 120°C. Die Temperatur des eingeleiteten Wasserdampfs kann deutlich höher liegen, z. B. auch 150°C. Sie sollte jedoch vorteilhafterweise nicht so hoch sein, daß zuviel Wasser aus der Salzlösung mitverdampft und das Salz im Kolonnensumpf auszufallen beginnt.

Die über Kopf der Strippkolonne abgezogene wäßrige (dampfförmige oder flüssige) Hydroxylaminfraktion enthält üblicherweise 10 - 200 g Hydroxylamin/l und kann gewünschtenfalls (Stufe d) in einer oder mehreren Stufen, die sich durch den Betriebsdruck unterscheiden, aufkonzentriert werden. Zweckmäßigerweise verwendet man eine übliche Füllkörperkolonne mit den oben genannten Füllkörpern oder eine geeignete Bodenkolonne, oder ein andere zur Destillation geeignete Apparatur. Eine Kolonne mit einer theoretischen Bodenzahl von 4 bis 20 ist bevorzugt.

Im allgemeinen arbeitet man in der Destillationskolonne mit einem Druck im Bereich von 1 bis 200 kPa (0,01 bis 2 bar), vorzugsweise 5 bis 120 kPa (0,05 bis 1,2 bar), besonders bevorzugt 30 bis 110 kPa (0,1 bis 1,1 bar). Je höher das Hydroxylamin aufkonzentriert werden soll, umso schonender (niedriger Druck und niedrige Temperatur) muß destilliert werden. Die Destillation kann kontinuierlich oder diskontinuierlich erfolgen.

Das über Kopf der Destillationskolonne abgezogene Wasser kann wieder als Strippdampf in die Strippkolonne zurückgeführt oder als Abwasser der Abwasseraufbereitung zugeführt werden.

Gegebenenfalls wird über dem Zulaufboden oder im Brüdenabzug noch ein Tröpfchenabscheider (Demister) derart installiert, daß ein Mitreißen des Salzes durch Tröpfchen verhindert wird.

Gemäß einer besonders bevorzugten Ausführungsform erfolgt das Ausstrippen des Hydroxylamins aus der Salzlösung und eine teilweise Aufkonzentration der Hydroxylaminlösung in nur einer Kolonne, nämlich einer Stripp-Destillationskolonne. Dabei wird Wasser über Kopf abdestilliert und die Entnahme der aufkonzentrierten Hydroxylaminlösung erfolgt etwa 1 bis 3 Böden über der Zuleitung der hydroxylaminhaltigen Salzlösung aus Stufe (a) bzw. Stufe (b). Die Salzlösung wird etwa in der Mitte der Kolonne zugespeist (ca. 5 - 30 theoretische Böden über dem Sumpf). Die hydroxylaminfreie Salzfraktion wird am Sumpf der Kolonne abgezogen. Die theoretische Bodenzahl der Stripp-Destillationskolonne liegt im allgemeinen im Bereich von 10 bis 50 und das Rücklaufverhältnis wird so eingeregelt, daß es im Bereich von 0,5 bis 3 liegt. Im übrigen wird die Stripp-Destillationskolonne wie oben beschrieben betrieben.

In einer weiter verbesserten Ausführungsform erfolgt das Ausstrippen des Hydroxylamins aus der Salzlösung und eine teilweise Aufkonzentration der Hydroxylaminlösung in der oben beschriebenen Stripp-Destillationskolonne mit eingesetzter Trennwand. Dabei wird wie oben beschrieben, Wasser über Kopf abdestilliert und die hydroxylaminfreie Salzfraktion am Sumpf abgezogen. Die Zuführung der hydroxylaminhaltigen Salzlösung erfolgt wie beschrieben etwa in der Mitte der Kolonne (ca. 5-30 theoretische Böden über dem Sumpf). Auf der Höhe dieser Zuführung ist über eine Höhe von 1 bis 10, vorzugsweise 1-5, theoretischen Stufen eine Trennwand in der Kolonne derart angebracht, daß die Kolonne vertikal in zwei separate Abschnitte getrennt wird, wobei sich die Zuspeisung etwa in der Mitte der Trennwand befindet. Dadurch kann auf der der Einspeisestelle gegenüberliegenden Seite die an Hydroxylamin angereichterte Lösung salzfrei im Bereich der Trennwand entnommen werden. Durch die Trennwand wird die Entnahmestelle von der Zuspeisestelle getrennt. Auf beiden Seiten der Trennwand liegen jedoch gleiche Konzentrationen an Hydroxylamin vor, wobei aber nur auf der Seite der Einspeisestelle sich Salz in der Lösung befindet. Die salzfreie, an Hydroxylamin angereicherte Lösung kann innerhalb der Höhe der Trennwand auf der Höhe maximaler Anreicherung des Hydroxylamins, vorzugsweise auf Höhe der Zuspeisung oder gegebenenfalls etwas darunter, entnommen werden. Im übrigen wird die Stripp-Destillationskolonne mit Trennwand wie oben beschrieben betrieben.

Alternativ zur Ausführungsform mit Trennwand kann auch eine Seitenkolonne derart an die zuvor beschriebene Stripp-Destillationskolonne angesetzt werden, daß oberhalb und unterhalb jeweils ein oder mehrer Trennstufen von der Einspeisestelle diese Seitenkolonne gas- und flüssigkeitsseitig mit der Stripp-Destillationskolonne verbunden ist und die Entnahme der hydroxylaminreicheren Lösung über diese Seitenkolonne erfolgt und die Seitenkolonne so gestaltet ist, daß ein Übertritt von salzhaltiger Lösung in die Entnahmestelle der Seitenkolonne vermieden ist.

Um das Risiko einer Zersetzung des Hydroxylamins so gering wie möglich zu halten, werden alle Lösungen, die freies Hydroxylamin enthalten, durch den Zusatz eines Zersetzungsstabilisators stabilisiert. Geeignete Stabilisatoren sind bekannt, beispielsweise Hydroxychinaldine, wie 8-Hydroxychinaldin, Flavone, wie Morin, Hydroxychinoline, wie 8-Hydroxychinolin, Hydoxyanthrachinone, wie Chinalizarin, die gegebenenfalls in Kombination mit Polyhydroxyphenolen, wie Pyrogallol, verwendet werden. Weitere geeignete Stabilisatoren sind Benzonitril, Benzamidoxim, N-Phenyl-, N-Hydroxythioharnstoff, Reduktone und/oder Reduktonate, beispielsweise 2,3-Didehydrohexano-1,4-lacton sowie Alkalisalze der Ethylendiamintetraessigsäure. Die Konzentration an Stabilisatoren, bezogen auf freies Hydroxylamin, beträgt vorteilhafterweise 5 x 10⁻⁴ bis 1 Gew.-%, insbesondere 5 x 10⁻³ bis 5 x 10⁻² Gew.-%. Als Stabilisatoren besonders bewährt haben sich insbesondere 8-Hydroxychinaldin, 8-Hydroxychinolin, sowie Polyethylen- oder Polypropylenimine und Verbindungen der Formel R¹R²N-A-NR³,R⁴, worin A für Cycloalkylen oder Alkylen steht und R¹ bis R⁴ unabhängig voneinander für CH₂COOH oder einen Benzylrest stehen, der gegebenenfalls durch OH, NH₂ oder COOH am Phenylring substituiert ist. Beispiele für diese Verbindungen sind trans-1,2-Diaminocyclohexan-N,N,N',N'-tetraessigsäure und N,N'-Di(2-hydroxybenzyl)ethylendiamin-N,N'-diessigsäure.

Das erfindungsgemäße Verfahren hat den Vorteil, daß es einfach und schonend durchführbar ist. Der Einsatz brennbarer Stoffe und das Arbeiten mit Feststoffen, die freies Hydroxylamin enthalten, kann vermieden werden. Die Konzentration an Hydroxylamin ist über den gesamten Prozeß gering. Beispielsweise liegt sie in der aus Stufe (a) bzw. (b) erhaltenen Lösung bei deutlich weniger als 45 Gew.-% und in der Strippkolonne bzw. Stripp-Destillationskolonne bei weniger als 30 Gew.% und im allgemeinen bei weniger als 15 Gew.-%. Aufgrund der Betriebsweise der Strippkolonne bzw. Stripp-Destillationskolonne ist der Flüssigkeits-Hold-up minimal und die Verweilzeit im Prozeß ist verhältnismäßig kurz. Hinzu kommt, daß die Betriebsweise der Strippkolonne bzw. Stripp-Destillationskolonne es erlaubt, bei höheren Drücken und insbesondere auch bei Normaldruck zu arbeiten.

Höhere Hydroxylaminkonzentrationen treten erst beim Aufkonzentrieren in der Destillationskolonne (Stufe d) auf. Die Hydroxylaminkonzentration der Lösung in Stufe d) läßt sich beliebig einstellen, beispielsweise im Bereich von 20 bis 70 Gew.-%. Um dabei das Zersetzungsrisiko zu verringern, kann in die zu destillierende Lösung zusätzlich weiterer Stabilisator gegeben werden.

Die für das erfindungsgemäße Verfahren erforderlichen Apparaturen können aus nicht-metallischen Werkstoffen, wie Glas, Keramik, Kunststoffe, gefertigt werden. Dadurch ist die durch Metallionen initiierte Zersetzung ausgeschlossen. Überraschenderweise hat sich auch gezeigt, daß Teile der Apparaturen auch aus metallischen Werkstoffen gefertigt werden können, ohne daß eine signifikant erhöhte Zersetzung des Hydroxylamins zu beobachten ist.

Aufgrund der einfachen aber gleichzeitig sicheren Prozeßgestaltung ist für die Durchführung des erfindungsgemäßen Verfahrens in industriellem Maßstab ein nur geringer Investitionsbedarf erforderlich. Zudem ist das Verfahren nahezu beliebig scale-upfähig.

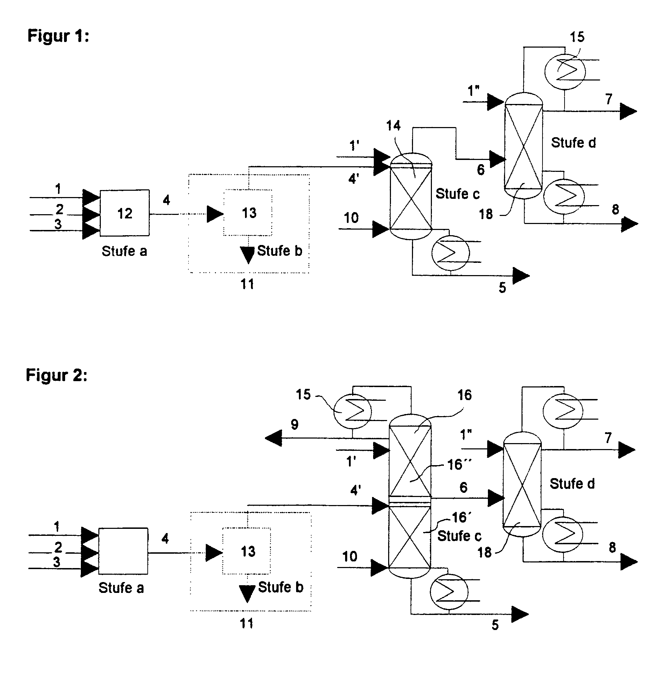

Das erfindungsgemäße Verfahren wird weiter anhand der in den Figuren 1 und 2 gezeigten Fließschemata erläutert:

In Stufe a) wird ein geeigneter Behälter 12, z.B. ein Rührkessel, ein statischer Mischer oder ein mit einer Reaktionsmischpumpe ausgestatteter Behälter, mit Hydroxylammoniumsalz bzw. einer Hydroxylammoniumsalzlösung 3, der zur Anwendung kommenden Base 2 und einem Stabilisator 1 beschickt, siehe Figuren 1 und 2. Man vermischt, wobei man eine wäßrige Lösung 4 erhält, die freies Hydroxylamin und das Salz enthält, das aus dem Basenkation und dem im Hydroxylammoniumsalz vorhandenen Säureanion stammt.

Falls in der Lösung 4 unlösliche Bestandteile vorhanden sind, werden diese in Stufe (b) mit Hilfe einer Filtriervorrichtung 13 abgetrennt, wobei man das Salz 11 sowie eine Lösung 4' erhält, siehe Figuren 1 und 2.

Die Lösung 4 bzw. 4' wird dann gegebenenfalls mit weiterem Stabilisator 1' versetzt. Anschließend erfolgt die Auftrennung in eine wäßrige Hydroxylaminfraktion und eine Salzfraktion gemäß Stufe (c).

Gemäß Figur 1 erfolgt die Auftrennung in einer Strippkolonne 14, wobei die Lösung 4 bzw. 4' auf den Kopf der Kolonne aufgegeben wird. Zu diesem Zweck wird in den Kolonnensumpf Wasserdampf 10 eingeleitet. Die Auftrennung erfolgt derart, daß am Sumpf der Kolonne die weitgehend hydroxylaminfreie Salzlösung 5 und über Kopf eine salzfreie wäßrige Hydroxylaminfraktion 6 (dampfförmig oder flüssig) abgezogen wird (in den Stufen (c) und (d) sind jeweils nicht näher erläuterte Wärmetauscher 15 vorgesehen).

Gemäß Figur 2 wird die Lösung 4' in eine Stripp-Destillationskolonne 16 eingespeist. Der untere Teil der Kolonne besteht aus einem Strippabschnitt 16' und der obere Teil aus einem Destillationsabschnitt 16". Die Lösung 4' wird zwischen diesen beiden Abschnitten d.h. auf den Kopf des Strippabschnittes eingespeist. Die Auftrennung in der Stripp-Destillationskolonne 16 erfolgt derart, daß am Sumpf der Kolonne die weitgehend hydroxylaminfreie Salzlösung 5 und über Kopf weitgehend hydroxylaminfreies Wasser 9 abgezogen werden. Die salzfreie Hydroxylaminlösung 6 wird über einen Seitenabzug entnommen.

Die aus Stufe (c) erhaltene Hydroxylaminlösung 6 kann gewünschtenfalls in einer Destillationskolonne 18 aufkonzentriert werden (Stufe d). Zweckmäßigerweise wird vor der Destillation noch weiterer Stabilisator 1" (Figuren 1 und 2) zugegeben. Die Hydroxylaminlösung 6 wird etwa in Höhe der theoretischen Böden 1 bis 5 der Destillationskolonne 18 eingespeist. Man erhält bei der Destillation über Kopf weitgehend hydroxylaminfreies Wasser 7 und am Sumpf eine Hydroxylaminlösung 8, deren Konzentration von den Destillationsbedingungen abhängig ist.

Soweit in den nachfolgenden Beispielen nicht anders angegeben, enthalten alle hydroxylaminhaltigen Lösungen 0,01 Gew.-%, bezogen auf freies Hydroxylamin, Stabilisator, z.B. 8-Hydroxychinolin, 8-Hydroxychinaldin, trans-1,2-Diaminocyclohexan-N,N,N',N'tetraessigsäure oder ein verzweigtes Polyethylenimin mit einem Molekulargewicht von 800.

### Beispiel 1

### Freisetzung von Hydroxylamin aus Hydroxylammoniumsulfat mit Ammoniak (Stufe a))

In einem wassergekühlten 31-Doppelmantelgefäß aus Glas mit Rührer wurden 538,3 g Hydroxylammoniumsulfat, 330 g Wasser und 0,1 g 8-Hydroxychinaldin als Stabilisator vorgelegt. Bei Raumtemperatur wurden unter Rühren langsam 446 g 25%-ige Ammoniaklösung zugetropft. Es wurde eine klare Lösung mit 16,4 Gew.-% Hydroxylamin erhalten.

### Beispiel 2

### Freisetzung von Hydroxylamin aus Hydroxylammoniumsulfat mit Natronlauge (Stufe a))

In einem wassergekühlten 31-Doppelmantelgefäß aus Glas mit Rührer wurden 538,3 g Hydroxylammoniumsulfat, 920 g Wasser und 0,1 g 8-Hydroxychinaldin als Stabilisator vorgelegt. Bei Raumtemperatur wurden unter Rühren langsam 1008 g 25%-ige Natronlauge zugetropft. Es wurde eine klare Lösung mit 8,4 Gew.-% Hydroxylamin erhalten.

### Beispiel 3

### Freisetzung von Hydroxylamin aus Hydroxylammoniumsulfat mit Natronlauge (Stufe a))

1500 g/h einer 50°C warmen, 37 gew.-%igen Hydroxylammoniumsulfatlösung wurden zusammen mit der stöchiometrischen Menge an 50 gew.-%iger Natronlauge, bei Raumtemperatur, kontinuierlich in einen 100 ml fassenden Rührkessel aus Glas geleitet. Die erforderliche Menge an Stabilisator (600 ppm) war in der Natronlauge gelöst. Das Reaktionsvolumen im Rührkessel betrug 70 ml. Daraus berechnet sich die Verweilzeit zu 2 min. Die klare, ca. 70°C warme Produktlösung wurde kontinuierlich über einen Überlauf abgezogen. Das gebildete Natriumsulfat blieb in Lösung. Die erhaltene wäßrige Lösung enthielt 11 Gew.-% HA, 23,6 Gew.-% Natriumsulfat und die erforderliche Menge an Stabilisator im 100 ppm-Bereich. Die Mengenströme wurden bilanziert. Es wurde keine HA-Zersetzung beobachtet.

### Beispiel 4

### Gewinnung einer wäßrigen Hydroxylamin(HA)-Lösung aus einer Hydroxylamin(HA)-Ammoniumsulfat(AS)-Lösung mit einer Strippkolonne (Stufe c))

Eine wäßrige Lösung, enthaltend 218 g HA/l und 680 g AS/l, wurde mit 300 ml/h auf die oberste Stufe einer Strippkolonne gegeben. Die Strippkolonne aus Glas, 2 m hoch, 35 mm Durchmesser, war über eine Höhe von 1,8 m mit 3-mm-Raschigringen aus Glas gefüllt. Dem Sumpf der Kolonne wurden 1000 ml/h destilliertes Wasser zugeführt. Die Kolonne stand unter einem Druck von 40 kPa. Die Sumpftemperatur betrug 84°C. Über Kopf der Kolonne wurden 1000 ml/h wäßrige, salzfreie HA-Lösung mit 39,0 g HA/h abdestilliert, entsprechend 59,6 % des gesamten HA im Feed. Aus dem Sumpf der Kolonne wurden 300 ml/h Ammoniumsulfatlösung mit einem Gehalt an HA von 86,0 g HA/l abgezogen. Das entspricht 39,4 % des gesamten HA im Feed.

Die Konzentration an HA in der Kolonne betrug maximal 100 g/l. Die Flüssigkeitsmenge in der Kolonne betrug je nach Belastung 20-225 ml. Die Verweilzeit der Flüssigkeit in der Kolonne betrug damit nur 1,5-10 min. Die Zersetzungsrate ist bei dieser geringen Konzentration und innerhalb der kurzen Zeit gering.

Weitere Versuche sind in nachstehender Tabelle aufgelistet.

**Tabelle 1**

| Abtrennung einer wäßrigen HA-Lösung aus einer wäßrigen HA-/AS-Lösung. | | | | | | | | |
|---|---|---|---|---|---|---|---|---|
| Feed | HA-Gehalt | H₂O/Dampf | Druck | Kopftemperatur | HA über Kopf | | HA im Sumpf | |
| ml/h | g/l | ml/h | kPa | °C | g/l | (%) | g/l | (%) |
| 318 | 222 | 1156* | 50,0 | 81,0 | 40,5 | 66,9 | 48,6 | 21,2 |
| 170 | 222 | 1060* | 70,0 | 90,5 | 22,8 | 65,6 | 45,2 | 17,2 |
| 370 | 219 | 1475^ | 100,4 | 100,9 | 32,4 | 62,2 | 75,6 | 47,8 |
| 179 | 105,5 | 1530^ | 100,8 | 100,6 | 9,0 | 70,5 | 29,0 | 27,6 |
| 245 | 220,0 | 1530^ | 100,8 | 100,6 | 28,0 | 73,3 | 54,0 | 42,2 |
| 150 | 4 | 990^ | 100,8 | 100,0 | 0,4 | 68,1 | 0,8 | 15,7 |
| 150 | 5,6 | 990^ | 100,8 | 99,9 | 0,6 | 73,0 | 0,4 | 5,6 |
| 119 | 204 | 1063^ | 101,5 | 100,4 | 15,4 | 67,6 | 40,5 | 19,7 |

| | | | | | | | | |
|---|---|---|---|---|---|---|---|---|
| * Der Sumpf der Kolonne wurde über einen Thermostaten beheizt. | | | | | | | | |
| ^ Das Wasser wurde zur gleichzeitigen Sumpfbeheizung als überhitzter Dampf zugeführt. | | | | | | | | |

### Beispiel 5

### Abtrennung einer wäßrigen HA-Lösung aus einer wäßrigen HA-/-Na₂SO₄-Lösung mit einer Strippkolonne (Stufe c))

Die wäßrige Lösung aus Beispiel 3, enthaltend 11 Gew.% HA und 23,6 Gew.-% Na₂SO₄, wurde mit 978 g/h auf die oberste Stufe einer Strippkolonne gegeben. Die Strippkolonne aus Email, 2 m hoch, 50 mm Durchmesser, war mit 5-mm-Raschigringen aus Glas gefüllt. Die Kolonne stand unter Normaldruck. In den Sumpf der Kolonne wurde Dampf mit 2,5 bar absolut geleitet. Das Dampf/-Feed-Verhältnis betrug 2,9:1. Aus dem Sumpf der Kolonne wurden 985 g/h Natriumsulfatlösung mit einem Gehalt an HA von 1,7 g HA/l abgezogen. Das entspricht 1 % des gesamten HA im Feed.

Über Kopf der Kolonne wurden 3593 g/h wäßrige, salzfreie HA-Lösung mit 36,8g HA/l abdestilliert, entsprechend 99,2 % des gesamten HA im Feed.

Weitere Versuche sind in nachstehender Tabelle aufgelistet.

**Tabelle 2:**

| Abtrennung einer wäßrigen HA-Lösung aus einer wäßrigen HA-/Na-triumsulfatlösung | | | | | | | | | |
|---|---|---|---|---|---|---|---|---|---|
| Feed | HA-Gehalt | Dampf/Feed | Druck | Kopftemperatur | HA über Kopf | | HA im Sumpf | | |
| g/h | g/l | kg/kg | kPa | °C | g/l | (%) | g/l | (%) | |
| 945 | 135 | 2,6 | 200 | 125,4 | 34,0 | 84,0 | 7,8 | 17 | |
| 970 | 136 | 2,7 | 101 | 106,3 | 35,5 | 96,2 | 3,3 | 2,5 | |
| 980 | 8,0 | 2,8 | 101 | 107,0 | 2,1 | 95,5 | 0,45 | 5,7 | |

### Beispiel 6

### Gewinnung einer wäßrigen HA-Lösung aus einer wäßrigen HA-/Natriumsulfatlösung mit einer Stripp-Destillationskolonne (Stufe c))

Eine wäßrige Lösung, enthaltend 221 g HA/l und 540 g AS/l, wurde mit 202 ml/h auf den 11. Boden einer Glockenbodenkolonne aus Glas, 35 mm Durchmesser, 1,6 m Gesamthöhe, 21 Böden (unterster Boden = Boden 1), gegeben. Dem Sumpf der Kolonne wurden 1300 ml/h Wasserdampf (ca. 125°C) zugeführt. Der Druck in der Kolonne betrug 99 kPa. Am Kopf der Kolonne wurde bei einer Kopftemperatur von 99,8°C und einem Rücklaufverhältnis von 1:3 (Rücklauf: Zulauf) 180 ml/h weitgehend HA-freies Wasser (0,6 g HA/1) abgezogen. Die wäßrige HA-Lösung (Produktlösung) wurde mit 1180 ml/h und einer Konzentration von 44 g/l über einen Seitenstrom von Boden 12 abgezogen. Am Sumpf der Kolonne wurden 400 ml/h Salzlösung abgezogen.

### Beispiel 7

### Gewinnung einer wäßrigen HA-Lösung aus einer wäßrigen HA-/Natriumsulfatlösung mit einer Strippdestillationskolonne unter Aufkonzentrierung über einen Seitenabzug (Stufe c))

Eine wäßrige HA-Lösung gemäß Beispiel 3, enthaltend 11 Gew.-% HA und 23,6 Gew.-% Na₂SO₄, wurde auf den 11. theoretischen Boden einer Glockenbodenkolonne aus Glas, 50 mm Durchmesser (Bodenanzahl entsprechend 30 theoretischen Böden) gegeben. Dem Sumpf der Kolonne wurde Wasserdampf, 2,5 bar absolut, Temperatur ca. 125°C, zugeführt. Der Druck in der Kolonne betrug 101 kPa. Am Kopf der Kolonne wurde weitgehend HA-freies Wasser (0,05 g, HA/l) abgezogen. Die wäßrige, salzfreie HA-Lösung (Produktlösung) wurde mit einer Konzentration von 8,3 Gew.-% über einen Seitenstrom von Boden 12 flüssig entnommen. Am Sumpf der Kolonne wurde die Salzlösung mit einem Restgehalt an HA von 0,2 Gew.-% abgezogen.

### Beispiel 8

### Aufkonzentration einer salzfreien wäßrigen Hydroxylaminlösung durch Destillation (Stufe d))

In einer Glasglockenbodenkolonne, 50 mm Durchmesser, 30 Glokkenböden, wurden koninuierlich auf den 8. Boden 1600 g/h einer 8,3 gew.-%igen wäßrigen, salzfreien, stabilisierten Hydroxylaminlösung eingespeist. Auf den obersten Boden, Boden Nr. 30, wurde zusätzlich eine geringe Menge an Stabilisator, gelöst in Hydroxylamin-Lösung, in die Kolonne dosiert. Das Rücklaufverhältnis wurde auf 0,5 eingestellt. Über Kopf der Kolonne wurde Wasser abdestilliert. Das Destillat enthielt noch eine Restmenge an Hydroxylamin von 0,07 Gew.-%. Aus dem Sumpf der Kolonne wurden ca. 240 ml/h einer 50 gew-%igen Hydroxylaminlösung über eine Pumpe ausgetragen.

## Patentansprüche

1. Verfahren zur Herstellung einer wäßrigen Lösung von freiem Hydroxylamin, wobei man
a) ein Hydroxylammoniumsalz mit einer geeigneten Base in Wasser behandelt,
b) aus der erhaltenen Lösung gegebenenfalls unlösliche Bestandteile abtrennt,
**dadurch gekennzeichnet, daß** man
c) die gemäß Stufe (a) oder Stufe (b) erhaltene Lösung durch Einleiten von Wasser und/oder Wasserdampf in den Kolonnensumpf im Gegenstrom mit Hilfe einer Strippkolonne bei einer Temperatur von ≥80°C in eine wäßrige Hydroxylaminfraktion und eine Salzfraktion auftrennt, und
d) falls gewünscht, die erhaltene wäßrige Hydroxylaminlösung destillativ aufkonzentriert.

2. Verfahren nach Anspruch 1, **dadurch gekennzeichnet, daß** man die wäßrige Hydroxylaminfraktion in Höhe des Zulaufbodens der Strippkolonne oder oberhalb davon abzieht.

3. Verfahren nach Anspruch 1 oder 2, **dadurch gekennzeichnet, daß** man bei einem Druck in der Strippkolonne im Bereich von 5 bis 300 kPa, vorzugsweise 50 bis 150 kPa, arbeitet.

4. Verfahren nach einem der vorhergehenden Ansprüche, **dadurch gekennzeichnet, daß** man in Stufe (d) eine Destillationskolonne verwendet und bei einem Druck im Bereich von 10 bis 150 kPa, vorzugsweise 20 bis 60 kPa, arbeitet.

5. Verfahren nach einem der Ansprüche 1 bis 4, **dadurch gekennzeichnet, daß** man das Ausstrippen des freien Hydroxylamins aus der Salzlösung und die Aufkonzentration der Hydroxylaminlösung in einer Stripp-Destillationskolonne durchführt, wobei die Entnahme der aufkonzentrierten Hydroxylaminlösung 0 bis 5 Böden über der Zuführung der Salzlösung aus Stufe (a) bzw. Stufe (b) erfolgt und das Wasser über Kopf und die Salzfraktion am Sumpf der Kolonne abgezogen werden kann.

6. Verfahren nach Anspruch 5, **dadurch gekennzeichnet, daß** man eine Stripp-Destillationskolonne verwendet, in der auf Höhe der Einspeisestelle eine vertikale Trennwand eingebracht ist derart, daß die salzführende Einspeiseseite von der gegenüberliegenden Entnahmestelle für die salzfreie hydroxylaminreiche Lösung durch die Trennwand getrennt ist.

7. Verfahren nach Anspruch 6, **dadurch gekennzeichnet, daß** sich die vertikale Trennwand über eine Höhe von etwa 1 bis 5 theoretischen Böden erstreckt und die Einspeisung im Bereich der halben Höhe der Trennwand liegt.

8. Verfahren nach Anspruch 5, **dadurch gekennzeichnet, daß** an der Stripp-Destillationskolonne eine Seitenkolonne angebracht ist und die Entnahme der hydroxylaminreichen, salzfreien Lösung über diese Seitenkolonne erfolgt.

9. Verfahren nach Anspruch 8, **dadurch gekennzeichnet, daß** die Seitenkolonne oberhalb ein oder mehrerer Trennstufen und unterhalb ein oder mehrerer Trennstufen von der Einspeisestelle gas- und flüssigkeitsseitig mit der Strip-Destillationskolonne verbunden ist und so gestaltet ist, daß ein Übertritt von salzhaltiger Lösung in die Entnahmestelle der Seitenkolonne vermieden wird.

10. Verfahren nach einem der Ansprüche 1 bis 9, **dadurch gekennzeichnet, daß** man das in der Strippdestillationskolonne in Stufe (c) oder in der Destillationskolonne in Stufe (d) über Kopf abgezogene Wasser bzw. den Wasserdampf ganz oder teilweise wieder in den Sumpf der Strippkolonne zurückführt.

11. Verfahren nach einem der vorhergehenden Ansprüche, **dadurch gekennzeichnet, daß** man allen Lösungen, die freies Hydroxylamin enthalten, einen Zersetzungsstabilisator zusetzt.

## Claims

1. A process for the preparation of an aqueous solution of free hydroxylamine,
a) a hydroxylammonium salt being treated with a suitable base in water and
b) if required, insoluble components being separated off from the solution obtained,
wherein
c) the solution obtained according to stage (a) or stage (b) is separated into an aqueous hydroxylamine fraction and a salt fraction by passing water and/or steam into the bottom of the column countercurrently with the aid of a stripping column at ≥ 80°C and
d) if desired, the aqueous hydroxylamine solution obtained is concentrated by distillation.

2. A process as claimed in claim 1, wherein the aqueous hydroxylamine fraction is taken off at the height of the feed tray of the stripping column or above said tray.

3. A process as claimed in claim 1 or 2, wherein a pressure of from 5 to 300, preferably from 50 to 150, kPa is employed in the stripping column.

4. A process as claimed in any of the preceding claims, wherein, in stage d), a distillation column is used and a pressure of from 10 to 150, preferably from 20 to 60, kPa is employed.

5. A process as claimed in any of claims 1 to 4, wherein the stripping of the free hydroxylamine from the salt solution and the concentration of the hydroxylamine solution are carried out in a stripping/distillation column, the removal of the concentrated hydroxylamine solution being effected from 0 to 5 trays above the feed of the salt solution in stage (a) or stage (b) and it being possible to take off the water via the top and the salt fraction at the bottom of the column.

6. A process as claimed in claim 5, wherein a stripping/distillation column is used in which a vertical dividing wall is introduced at the height of the feed point, in such a way that the salt-conveying feed side is separated from the opposite removal point of the salt-free hydroxylamine-rich solution by the dividing wall.

7. A process as claimed in claim 6, wherein the vertical dividing wall extends over a height of from about 1 to 5 theoretical plates and the feed is located in the region of half the height of the dividing wall.

8. A process as claimed in claim 5, wherein a side column is attached to the stripping/distillation column and the removal of the hydroxylamine-rich, salt-free solution is effected via this side column.

9. A process as claimed in claim 8, wherein the side column is connected on the gas side and liquid side to the stripping/distillation column, above one or more theoretical plates and below one or more theoretical plates from the feed point, and is designed in such a way that passage of salt-containing solution into the removal point of the side column is avoided.

10. A process as claimed in any of claims 1 to 9, wherein the water taken off via the top in the stripping/distillation column in stage (c) or in the distillation column in stage (d) or the steam is completely or partly recycled into the bottom of the stripping column.

11. A process as claimed in any of the preceding claims, wherein a decomposition stabilizer is added to all solutions which contain free hydroxylamine.

## Revendications

1. Procédé de préparation d'une solution aqueuse d'hydroxylamine libre, dans lequel
a) on traite un sel d'hydroxyl-ammonium avec une base appropriée dans de l'eau,
b) on sépare de la solution obtenue des éléments éventuellement insolubles,
**caractérisé en ce que**
c) on sépare la solution obtenue conformément à l'étape (a) ou l'étape (b) en une fraction aqueuse d'hydroxylamine et une fraction saline à l'aide d'une colonne de stripage à une température de ≥80°C, par introduction d'eau et/ou de vapeur d'eau dans le fond de la colonne, en contre-courant, et
d) dans le cas où on le souhaite, on concentre par distillation la solution aqueuse d'hydroxylamine obtenue.

2. Procédé suivant la revendication 1, **caractérisé en ce qu'**on soutire la fraction aqueuse d'hydroxylamine à hauteur du plateau d'alimentation de la colonne de stripage ou au-dessus de celui-ci.

3. Procédé suivant l'une des revendications 1 et 2, **caractérisé en ce qu'**on opère à une pression dans la colonne de stripage de l'ordre de 5 à 300 kPa, de préférence de 50 à 150 kPa.

4. Procédé suivant l'une des revendications précédentes, **caractérisé en ce que** dans l'étape (d), on utilise une colonne de distillation et **en ce qu'**on opère à une pression de l'ordre de 10 à 150 kPa, de préférence de 20 à 60 kPa.

5. Procédé suivant l'une des revendications 1 à 4, **caractérisé en ce qu'**on effectue le stripage de l'hydroxylamine libre hors de la solution saline et la concentration de la solution d'hydroxylamine dans une colonne de stripage-distillation, le prélèvement de la solution d'hydroxylamine concentrée ayant lieu 0 à 5 plateaux au-dessus de l'amenée de la solution saline de l'étape (a) ou de l'étape (b) et l'eau pouvant être soutirée par la tête de la colonne et la fraction saline au fond de celle-ci.

6. Procédé suivant la revendication 5, **caractérisé en ce qu'**on utilise une colonne de stripage-distillation dans laquelle est introduite, à hauteur de l'emplacement d'alimentation, une paroi séparatrice verticale de telle façon que le côté alimentation qui guide du sel soit séparé de l'emplacement opposé de prélèvement pour la solution riche en hydroxylamine, exempte de sel, par la paroi séparatrice.

7. Procédé suivant la revendication 6, **caractérisé en ce que** la paroi séparatrice verticale s'étend sur une hauteur d'environ 1 à 5 plateaux théoriques et **en ce que** l'alimentation se situe dans la zone de la mi-hauteur de la paroi séparatrice.

8. Procédé suivant la revendication 5, **caractérisé en ce qu'**une colonne latérale est agencée sur la colonne de stripage-distillation et **en ce que** le prélèvement de la solution riche en hydroxylamine, exempte de sel, a lieu par l'intermédiaire de cette colonne latérale.

9. Procédé suivant la revendication 8, **caractérisé en ce que** la colonne latérale est reliée du côté gaz et du côté liquide à la colonne de stripage-distillation au-dessus d'un ou de plusieurs étages de séparation et en dessous d'un ou de plusieurs étages de séparation de l'emplacement d'alimentation et est conformée de façon qu'un transfert de solution contenant du sel dans l'emplacement de prélèvement de la colonne latérale soit évité.

10. Procédé suivant l'une des revendications 1 à 9, **caractérisé en ce qu'**on recycle l'eau ou la vapeur d'eau soutirée par la tête dans la colonne de stripage-distillation dans l'étape (c) ou dans la colonne de distillation dans l'étape (d), totalement ou partiellement, à nouveau dans le fond de la colonne de stripage.

11. Procédé suivant l'une des revendications précédentes, **caractérisé en ce qu'**on ajoute à toutes les solutions qui contiennent de l'hydroxylamine libre un agent stabilisant vis-à-vis d'une décomposition.
